# FASCICULE DE BREVET EUROPEEN

(11) **EP 2 817 202 B1**
(45) Date de publication et mention de la délivrance du brevet: **13.04.2016**
(21) Numéro de dépôt: 13705429.2
(22) Date de dépôt: 12.02.2013
(51) Int. Cl.: B62D 25/20

(54) **VÉHICULE AUTOMOBILE COMPRENANT UN PLANCHER ARRIÈRE EN DEUX PARTIES ET DES MOYENS DE RIGIDIFICATION DE LA PARTIE AVANT**
KRAFTFAHRZEUG MIT EINEM ZWEITEILIGEN HINTEREN BODEN UND VORRICHTUNG ZUR VERSTEIFUNG DES FRONTTEILS
MOTOR VEHICLE COMPRISING A TWO-PART REAR FLOOR AND MEANS FOR STIFFENING THE FRONT PART

(30) Priorité: 22.02.2012 FR 1251609
(43) Date de publication de la demande: 31.12.2014
(73) Titulaire: Renault S.A.S., 92100 Boulogne-Billancourt (FR)
(72) Inventeur: VINIAL, Christophe, F-91220 Le Plessis Pate (FR); LEFEBVRE, Benjamin, F-91220 Le Plessis Pate (FR)
(86) Numéro de dépôt international: PCT/EP2013/052768
(87) Numéro de publication internationale: WO 2013/124186

(56) Documents cités:
- EP-A2- 0 298 903
- US-A1- 2009 001 766
- US-B1- 6 666 501

## Description

La présente invention concerne le domaine des véhicules automobiles et, notamment les véhicules utilitaires comportant une unique rangée de sièges.

Plus particulièrement, l'invention concerne la structure des planchers du véhicule automobile.

Un exemple de l'état de la technique est décrit par le document US 6 666 501 B1. Les véhicules utilitaires comprennent à l'arrière de la première rangée de sièges, délimitant un plancher arrière d'un plancher avant, un espace de chargement dont le plancher arrière présente un motif en relief réalisé généralement lors de l'emboutissage de la tôle formant le plancher arrière. Afin d'obtenir une surface plane et présentant une meilleure résistance aux charges appliquées sur le plancher arrière, un plancher supérieur, appelé « plancher arrêt de charge » est disposé de façon à recouvrir le plancher arrière.

Généralement, le plancher d'un véhicule automobile comprend une partie arrière appelée « plancher arrière » reliée à une partie avant appelée « plancher avant » par un épaulement appelé « pare-close ». Le plancher arrière ainsi défini est délimité par la traverse pare-close et un anneau de remorquage situé à l'extrémité arrière du véhicule automobile.

Afin de simplifier la conception d'un plancher arrière, il est prévu de réaliser un plancher arrière en deux parties, comprenant une partie avant et une partie arrière reliées entre elles par des moyens de liaison de manière à former une tôle. Le plancher supérieur sera alors destiné à recouvrir la partie avant du plancher arrière, afin de former un espace de chargement substantiellement plan.

Généralement, un réservoir à carburant est situé sous le plancher arrière, de sorte qu'une trappe ou un perçage délimitant une zone appelée « puits de jauge » permet d'accéder à la jauge du réservoir à carburant. Cette zone d'accès se présente sous la forme d'un perçage pratiqué dans la partie avant du plancher arrière. Afin de pouvoir utiliser les planchers arrières connus dans tous les types de véhicules, il est nécessaire d'adapter cette zone d'accès, notamment pour les véhicules utilitaires. En effet, dans les véhicules utilitaires, cette zone d'accès est condamnée par la présence du plancher supérieur sur la partie avant du plancher arrière. Afin d'assurer la raideur du plancher arrière, le perçage doit donc être rebouché.

Toutefois, le rebouchage du perçage ne suffit pas à obtenir une raideur suffisante du plancher arrière.

Un objectif de l'invention est donc de pallier ces inconvénients et de fournir un véhicule automobile comprenant un plancher arrière présentant une raideur suffisante, notamment au niveau de la partie avant du plancher arrière, pour rigidifier le plancher supérieur.

Selon un mode de réalisation, l'invention a pour objet un véhicule automobile comprenant un plancher arrière comportant une partie avant et une partie arrière reliées par des moyens de liaison, un plancher avant relié à la partie avant du plancher arrière, un plancher supérieur recouvrant la partie avant du plancher arrière et un réservoir à carburant disposé sous le plancher arrière.

Le plancher arrière comprend des moyens de rigidification de la partie avant en contact avec le plancher supérieur.

Ainsi, lors du chargement sur le plancher arrière, son fléchissement est limité par les moyens de rigidification.

Avantageusement, la partie avant du plancher arrière comprend une première portion substantiellement plane de fixation à la partie arrière et au plancher supérieur s'étendant vers l'avant du véhicule par deux portions substantiellement inclinées et par une deuxième portion substantiellement plane de fixation au plancher supérieur, lesdites portions substantiellement planes formant une première et une seconde surfaces de contact.

Par exemple, la deuxième portion substantiellement inclinée comprend une portion emboutie délimitant une zone d'accès à la jauge du réservoir de carburant.

La portion emboutie peut comprendre un contre-embouti délimitant une troisième surface de contact avec le plancher supérieur.

Avantageusement, le plancher supérieur est fixé au contre-embouti de la partie avant du plancher arrière par des moyens de soudure.

Selon un mode de réalisation, la partie avant du plancher arrière comprend une traverse transversale.

Le plancher supérieur peut comprendre une équerre de rigidification en regard de la traverse transversale du plancher arrière.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement une partie d'un véhicule automobile selon l'invention, et
- la figure 2 est une vue de côté de la figure 1.

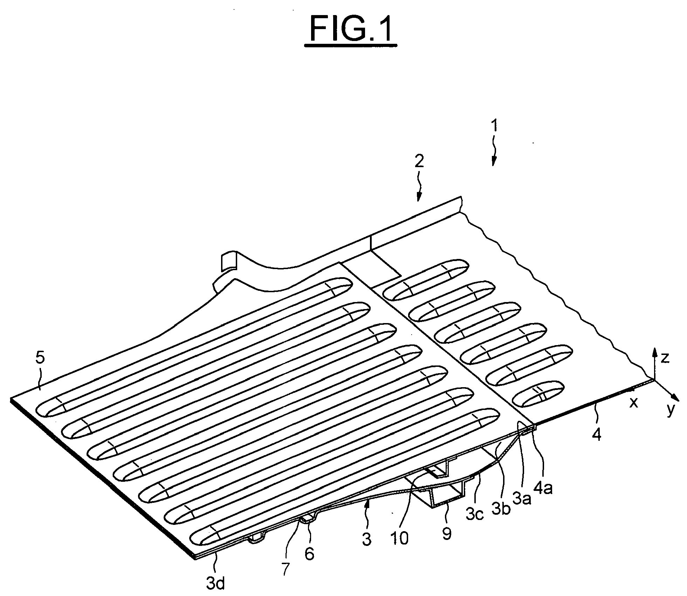

Dans la suite de la description, les termes « longitudinal », « transversal », « vertical », « avant », « arrière », « gauche » et « droite », s'entendent par rapport au repère orthogonal usuel des véhicules automobiles, représenté sur la figure 1, et comprenant :
- un axe longitudinal X, horizontal et dirigé de l'arrière vers l'avant du véhicule ;
- un axe transversal Y, horizontal, perpendiculaire à l'axe X et dirigé de droite à gauche du véhicule se déplaçant vers l'avant ;
- un axe Z, orthogonal aux axes X et Y et vertical dirigé de bas en haut.

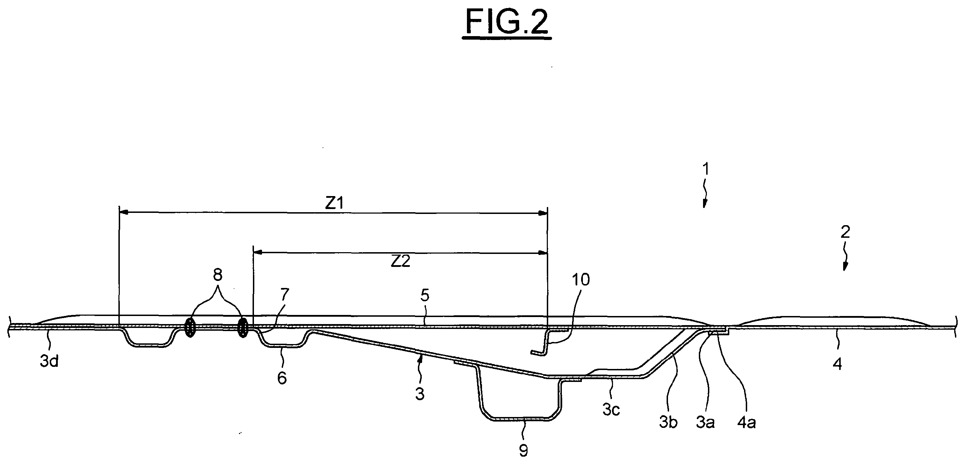

Telle qu'illustrée sur les figures 1 et 2, une partie d'un véhicule automobile, référencée 1 dans son ensemble, comprend un plancher arrière 2 destiné à être relié à un plancher avant (non représenté) du véhicule automobile 1. Le plancher arrière 2 s'étend suivant un axe longitudinal X, sous l'espace de chargement, notamment d'un véhicule utilitaire, et au-dessus de l'axe des roues arrières (non représentées) du véhicule.

Le plancher arrière 2 comprend une partie avant 3 reliée au plancher avant (non représenté) généralement par une traverse transversale (non représentée) et une partie arrière 4 reliée à la partie avant 3.

La partie arrière 4 présente une forme de plaque sensiblement plane s'étendant dans le plan XY, tandis que la partie avant 3 présente une première portion 3a sensiblement plane s'étendant dans le prolongement de la partie arrière 4 et deux portions sensiblement inclinées 3b, 3c de manière à former un dénivelé suivant l'axe Z entre la partie avant 3 et la partie arrière 4.

La deuxième portion sensiblement inclinée 3c s'étend vers l'avant du véhicule automobile 1 par une deuxième portion sensiblement plane 3d. La deuxième portion plane 3d se trouve alignée avec la première portion plane 3a. La première portion plane 3a de la partie avant 3 repose sur une languette 4a située à l'extrémité avant de la partie arrière 4.

Les parties avant et arrière 3, 4 sont réalisées en tôle métallique emboutie et sont reliées entre elles par des moyens de soudages formant un cordon de soudure à la jonction entre les deux parties 3, 4. En variante, les parties avant et arrière 3, 4 peuvent être reliées par collage ou tout autre moyen de fixation.

Le véhicule automobile 1 comprend un plancher supérieur 5 destiné à venir recouvrir la partie avant 3 du plancher arrière 2 afin d'obtenir une surface sensiblement plane facilitant le chargement dans l'espace de chargement du véhicule automobile 1.

Le plancher supérieur 5 présente une forme de plaque sensiblement plane s'étendant dans le plan XY dans le prolongement de la partie arrière 4 et est fixé respectivement sur chacune des portions sensiblement planes 3a, 3d de la partie avant 3 du plancher arrière 2, afin de former deux surfaces de contact (non référencées).

La deuxième portion substantiellement inclinée 3c comprend une portion emboutie 6 délimitant une zone d'accès à la jauge d'un réservoir de carburant (non représenté) situé sous le plancher arrière. La portion emboutie 6 comprend un contre-embouti 7 délimitant une troisième surface de contact (non référencée) avec le plancher supérieur 5.

Le plancher supérieur 5 est fixé au contre-embouti 7 de la partie avant 3 du plancher arrière 2 par des moyens de soudure 8, par exemple en deux points de soudure.

La partie avant 3 du plancher arrière 2 comprend une traverse transversale 9 s'étendant transversalement par rapport à l'axe longitudinal X du véhicule automobile 1 et fixée sur la surface inférieure de la deuxième portion sensiblement inclinée 3c.

Le plancher supérieur 5 comprend une équerre de rigidification 10 fixée sur la surface inférieure du plancher supérieur 5 en regard de la traverse transversale 9 du plancher arrière 2, de sorte que lors du chargement dans l'espace de chargement, le plancher supérieur 5 repose sur trois surfaces de contact du plancher arrière 2, respectivement les deux portions sensiblement planes 3a, 3d et le contre-embouti 7, ainsi que sur l'équerre de rigidification 10.

Grâce à l'invention qui vient d'être décrite, le risque de déformation du plancher supérieur 5 au niveau d'une zone Z1 dite « sans appui » délimitée par la deuxième portion sensiblement plane 3d du plancher arrière 2 et l'équerre de rigidification 10 est réduit par la présence du contre-embouti 7.

En effet, le contre-embouti 7 permet de réduire cette zone Z1 en une zone Z2 de dimensions inférieures.

De plus, un tel contre-embouti 7 permet d'utiliser un tel plancher arrière pour véhicule utilitaire pour tout autre véhicule sans modifications importantes. En effet, pour l'utilisation d'un tel plancher pour un véhicule non utilitaire, il suffira de percer le contre-embouti 7 afin de laisser libre l'accès à la jauge de réservoir à carburant.

## Revendications

1. Véhicule automobile comprenant un plancher arrière (2) comportant une partie avant (3) et une partie arrière (4) reliées par des moyens de liaison, un plancher avant relié à la partie avant (3) du plancher arrière (2), un plancher supérieur (5) recouvrant la partie avant (3) du plancher arrière (2) et un réservoir à carburant disposé sous le plancher arrière (2), **caractérisé en ce que** le plancher arrière (2) comprend des moyens de rigidification (7) de la partie avant (3) en contact avec le plancher supérieur (5).

2. Véhicule automobile selon la revendication 1, dans lequel la partie avant (3) du plancher arrière (2) comprend une première portion substantiellement plane (3a) de fixation à la partie arrière (4) et au plancher supérieur (5) s'étendant vers l'avant du véhicule (1), par deux portions substantiellement inclinées (3b, 3c) et par une deuxième portion substantiellement plane (3d) de fixation au plancher supérieur (5), lesdites portions substantiellement planes (3a) et (3d) formant une première et une seconde surfaces de contact.

3. Véhicule automobile selon la revendication 2, dans lequel la deuxième portion substantiellement inclinée (3c) comprend une portion emboutie (6) délimitant une zone d'accès à la jauge du réservoir de carburant.

4. Véhicule automobile selon la revendication 3, dans lequel la portion emboutie (6) comprend un contre-embouti (7) délimitant une troisième surface de contact avec le plancher supérieur (5).

5. Véhicule automobile selon la revendication 4, dans lequel le plancher supérieur (5) est fixé au contre-embouti (7) de la partie avant (3) du plancher arrière (2) par des moyens de soudure (8).

6. Véhicule automobile selon l'une quelconque des revendications précédentes, dans lequel la partie avant (3) du plancher arrière (2) comprend une traverse transversale (9).

7. Véhicule automobile selon la revendication 6, dans lequel le plancher supérieur (5) comprend une équerre de rigidification (10) en regard de la traverse transversale (9) du plancher arrière (2).

## Patentansprüche

1. Kraftfahrzeug, umfassend einen hinteren Boden (2), umfassend einen vorderen Teil (3) und einen hinteren Teil (4), die durch Verbindungsmittel verbunden sind, einen vorderen Boden, der mit dem vorderen Teil (3) des hinteren Bodens (2) verbunden ist, einen oberen Boden (5), der den vorderen Teil (3) des hinteren Bodens (2) bedeckt, und einen Treibstoffbehälter, der unter dem hinteren Boden (2) angeordnet ist, **dadurch gekennzeichnet, dass** der hintere Boden (2) Mittel (7) zur Versteifung des vorderen Teils (3), der mit dem oberen Boden (5) in Kontakt ist, umfasst.

2. Kraftfahrzeug nach Anspruch 1, bei dem der vordere Teil (3) des hinteren Bodens (2) einen ersten im Wesentlichen flachen Abschnitt (3a) zur Befestigung am hinteren Teil (4) und am oberen Boden (5) umfasst, der sich nach vorne zum Fahrzeug (1) durch zwei im Wesentlichen geneigte Abschnitte (3b, 3c) und durch einen zweiten im Wesentlichen flachen Abschnitt (3d) zur Befestigung am oberen Boden (5) erstreckt, wobei die im Wesentlichen flachen Abschnitte (3a) und (3d) eine erste und eine zweite Kontaktfläche bilden.

3. Kraftfahrzeug nach Anspruch 2, bei dem der zweite im Wesentlichen geneigte Abschnitte (3c) einen tiefgezogenen Abschnitt (6) umfasst, der eine Zugangszone zum Füllstandsmesser des Treibstoffbehälters begrenzt.

4. Kraftfahrzeug nach Anspruch 3, bei dem der tiefgezogene Abschnitt (6) ein Gegenstück (7) umfasst, das eine dritte Kontaktfläche mit dem oberen Boden (5) begrenzt.

5. Kraftfahrzeug nach Anspruch 4, bei dem der obere Boden (5) am Gegenstück (7) des vorderen Teils (3) des hinteren Bodens (2) durch Schweißmittel (8) befestigt ist.

6. Kraftfahrzeug nach einem der vorhergehenden Ansprüche, bei dem der vordere Teil (3) des hinteren Bodens (2) eine Querstrebe (9) umfasst.

7. Kraftfahrzeug nach Anspruch 6, bei dem der obere Boden (5) einen Versteifungswinkel (10) gegenüber der Querstrebe (9) des hinteren Bodens (2) umfasst.

## Claims

1. Motor vehicle comprising a rear floor (2) having a front part (3) and a rear part (4) connected by connecting means, a front floor connected to the front part (3) of the rear floor (2), an upper floor (5) covering the front part (3) of the rear floor (2) and a fuel tank arranged below the rear floor (2), **characterized in that** the rear floor (2) comprises means (7) for stiffening the front part (3) in contact with the upper floor (5).

2. Motor vehicle according to Claim 1, in which the front part (3) of the rear floor (2) comprises a first substantially flat portion (3a) for fastening to the rear part (4) and to the upper floor (5) extending toward the front of the vehicle (1), via two substantially inclined portions (3b, 3c) and via a second substantially flat portion (3d) for fastening to the upper floor (5), said substantially flat portions (3a) and (3d) forming first and second contact surfaces.

3. Motor vehicle according to Claim 2, in which the second substantially inclined portion (3c) comprises a stamped portion (6) delimiting an access zone to the gage of the fuel tank.

4. Motor vehicle according to Claim 3, in which the stamped portion (6) comprises a counter-stamped piece (7) delimiting a third contact surface with the upper floor (5).

5. Motor vehicle according to Claim 4, in which the upper floor (5) is fastened to the counter-stamped piece (7) of the front part (3) of the rear floor (2) by weld means (8).

6. Motor vehicle according to any one of the preceding claims, in which the front part (3) of the rear floor (2) comprises a crossmember (9).

7. Motor vehicle according to Claim 6, in which the upper floor (5) comprises a stiffening bracket (10) opposite the crossmember (9) of the rear floor (2).
